# EUROPÄISCHE PATENTSCHRIFT

(11) **EP 3 158 285 B1**
(45) Veröffentlichungstag und Bekanntmachung des Hinweises auf die Patenterteilung: **22.08.2018**
(21) Anmeldenummer: 15736208.8
(22) Anmeldetag: 17.06.2015
(51) Int. Cl.: G01B 11/16, G01B 11/25

(54) **VERFAHREN ZUR ERMITTLUNG EINES RÄUMLICHEN VERSCHIEBUNGSVEKTORFELDES**
METHOD FOR DETERMINING A SPATIAL DISPLACEMENT VECTOR FIELD
PROCÉDÉ DE DÉTERMINATION D'UN CHAMP VECTORIEL DE DÉPLACEMENT SPATIAL

(30) Priorität: 19.06.2014 DE 102014108643
(43) Veröffentlichungstag der Anmeldung: 26.04.2017
(73) Patentinhaber: LaVision GmbH, 37081 Göttingen (DE)
(72) Erfinder: WIENEKE, Bernhard, 37073 Göttingen (DE)
(74) Vertreter: Schneider, Peter Christian
(86) Internationale Anmeldenummer: PCT/EP2015/063614
(87) Internationale Veröffentlichungsnummer: WO 2015/193383

(56) Entgegenhaltungen:
- DE-A1- 19 509 962
- US-A- 4 967 093
- SUTTON M ET AL: "Application of an optimized digital correlation method to planar deformation analysis", IMAGE AND VISION COMPUTING, ELSEVIER, GUILDFORD, GB, Bd. 4, Nr. 3, 1. August 1986 (1986-08-01), Seiten 143-150, XP026655774, ISSN: 0262-8856, DOI: 10.1016/0262-8856(86)90057-0 [gefunden am 1986-08-01]
- CHEN UND F P CHIANG D J: "Optimal sampling and range of measurement in displacement only laser speckle correlation", EXPERIMENTAL MECHANICS, SPRINGER NEW YORK LLC, US, Bd. 32, 1. Januar 1992 (1992-01-01), Seiten 145-153, XP009185968, ISSN: 0014-4851, DOI: 10.1007/BF02324726

## Beschreibung

### Gebiet der Erfindung

Die Erfindung bezieht sich auf ein Verfahren zur Ermittlung eines räumlichen Verschiebungsvektorfeldes eines Prüfobjektes, bei dem von dem Prüfobjekt Bilder zweier Bildarten aufgenommen werden, nämlich
- wenigstens ein Eigenmusterbild, bei dessen Aufnahme das Prüfobjekt mit gleichförmigem Beleuchtungslicht beleuchtet wird, und
- wenigstens ein Projektionsmusterbild, bei dessen Aufnahme das Prüfobjekt mit einem räumlich modulierten, auf das Prüfobjekt projizierten Projektionsmuster beleuchtet wird,
   wobei
- aus dem Eigenmusterbild durch dessen Vergleich mit einem zu einem Referenzzeitpunkt aufgenommenen Eigenmusterbild des Prüfobjektes ein ebenes Verschiebungsvektorfeld des Prüfobjektes zum Aufnahmezeitpunkt des Eigenmusterbildes als dem Eigenmusterbild zugeordnete Repräsentation des Prüfobjektes berechnet wird und
- aus dem Projektionsmusterbild eine Form des Prüfobjektes zum Aufnahmezeitpunkt des Projektionsmusterbildes als dem Projektionsmusterbild zugeordnete Repräsentation des Prüfobjektes berechnet wird
und wobei das räumliche Verschiebungsvektorfeld aus den den aufgenommenen Bildern zugeordneten Repräsentationen des Prüfobjektes ermittelt wird.

### Stand der Technik

Derartige Verfahren sind bekannt aus der DE 195 09 962 A1.

Ein häufiges, beispielsweise in der Materialprüftechnik auftretendes Problem ist die Ermittlung der dreidimensionalen Verformung eines unter mechanischer Spannung stehenden Prüfobjektes. Gesucht wird dabei ein räumliches Verschiebungsvektorfeld, welches (innerhalb der Auflösungsgrenzen der Messung) jedem (sichtbaren) Oberflächenpunkt des Prüfobjektes einen dreidimensionalen Vektor zuordnet, welcher dessen Verschiebung zum Messzeitpunkt relativ zu einem zeitlich beabstandeten Referenzzustand des Prüfobjektes repräsentiert. Dieses räumliche Verschiebungsvektorfeld soll hier synonym auch als 3D-Verformung angesprochen werden.

Standartmäßig wird die 3D-Verformung mittels eines als Stereo-DIC (digital image correlation) bezeichneten Verfahrens unter Verwendung zweier Kameras, deren Bilder miteinander korreliert werden, ermittelt.

Es sind jedoch auch Verfahren bekannt, die lediglich eine Kamera benötigen. So sieht z.B. das in der o.g. Druckschrift offenbarte Verfahren vor, mittels nur einer Kamera von dem Prüfobjekt Bilder zweier Bildarten aufzunehmen. Insbesondere wird ein sogenanntes Eigenmusterbild aufgenommen, für welches das Prüfobjekt im Wesentlichen gleichförmig beleuchtet wird, sodass eine auf seiner Oberfläche vorhandene, vorzugsweise zufällige Struktur erkennbar wird. Es kann sich hierbei um eine natürliche Oberflächenstruktur des Prüfobjektes, eine künstlich aufgebrachte Struktur, wie beispielsweise zufällig verteilte Farbtropfen oder Ähnliches handeln. Durch Vergleich des Eigenmusterbildes zu einem gegebenen Aufnahmezeitpunkt mit einem zu einem gegebenen Referenzzeitpunkt aufgenommenen Eigenmusterbild lässt sich für jeden auf dem zweidimensionalen Bild sichtbaren Oberflächenpunkt des Prüfobjektes ein zweidimensionaler Vektor bestimmen, welche die zweidimensionale Verschiebung des Oberflächenpunktes im Bild zwischen dem Referenzzustand und dem Zustand des Prüfobjektes zum Zeitpunkt der Eigenbildaufnahme repräsentiert. Dieses ebene Verschiebungsvektorfeld soll hier synonym auch als 2D-Verformung bezeichnet werden. Eigenmusterbild und 2D-Verformung sind daher einander insofern zugeordnet, als die 2D-Verformung aus dem Eigenmusterbild errechnet werden kann. Das ebene Verschiebungsvektorfeld, d.h. die 2D-Verformung, wird daher hier als die dem Eigenmusterbild zugeordnete Repräsentation des Prüfobjektes bezeichnet.

Weiter ist es bekannt, ein sogenanntes Projektionsmusterbild des Prüfobjektes aufzunehmen, welches sich dadurch auszeichnet, dass für seine Aufnahme das Prüfobjekt mit einem bekannten Projektionsmuster beleuchtet wird. Das Projektionsmuster ist eine vorzugsweise periodische, räumliche Identitätsmodulation des Beleuchtungslichtes. Beispielsweise kann ein Balken-, Gitter- oder Wellenmuster auf das Prüfobjekt projiziert werden, wobei zwischen Hell- und Dunkelbereichen des Musters scharfe Kanten oder kontinuierliche Übergänge realisiert sein können. Ist das Projektionsmuster als solches bekannt, lässt sich aus seiner Verzerrung im Projektionsmusterbild auf die dreidimensionale Form des Prüfobjektes zum Aufnahmezeitpunkt des Projektionsmusterbildes schließen. Durch Vergleich dieser Form des Prüfobjektes mit seiner Form zu einem gegebenen Referenzzeitpunkt lässt sich auf die Formänderung des Prüfobjektes zwischen dem Referenzzeitpunkt und dem Aufnahmezeitpunkt des Projektionsmusterbildes schließen. Projektionsmusterbild und Form des Prüfobjektes sind daher einander insoweit zugeordnet, als sich die Form des Prüfobjektes aus dem Projektionsmusterbild errechnen lässt. Die Form des Prüfobjektes wird daher hier auch als dem Projektionsmusterbild zugeordnete Repräsentation des Prüfobjektes bezeichnet.

Zur Ermittlung der 3D-Verformung ist es weiter bekannt, die oben erläuterte 2D-Verformung sowie die Form bzw. Formänderung des Prüfobjektes miteinander zu kombinieren. Zur Ermittlung des räumlichen Verschiebungsvektorfeldes werden also das ebene Verschiebungsvektorfeld und die dreidimensionale Form bzw. Formänderung des Prüfobjektes kombiniert. Die hierfür erforderlichen oder möglichen mathematischen Berechnungsregeln sind dem Fachmann bekannt und für die vorliegende Erfindung nicht weiter von Bedeutung.

Problematisch bei den oben skizzierten, bekannten Verfahren ist, dass das Eigenbild und das Projektionsmusterbild typischerweise zu unterschiedlichen Zeitpunkten aufgenommen werden müssen. Der Ermittlung der 3D-Verformung werden somit die für den Aufnahmezeitpunkt des Eigenmusterbildes repräsentative 3D-Verformung und die für den (davon unterschiedlichen) Aufnahmezeitpunkt des Projektionsmusterbildes repräsentative Form des Prüfobjektes zugrunde gelegt. Die ermittelte 2D-Verformung ist somit nicht repräsentativ für einen bestimmten Zeitpunkt, sondern eher für das zeitliche Intervall zwischen den beiden Aufnahmezeitpunkten von Eigenmusterbild und Projektionsmusterbild mit der entsprechenden Messunschärfe. Bei schnell ablaufenden Prozessen im Prüfobjekt, beispielsweise Bruch- oder Rissprozessen, mindert dies den Erkenntniswert der Messung erheblich.

Aus der oben genannten gattungsbildenden Druckschrift ist es bekannt, Eigenmusterbild und Projektionsmusterbild simultan aufzunehmen, wobei das Prüfobjekt gleichzeitig mit einem gleichförmigen und einem räumlich modulierten Beleuchtungslicht in unterschiedlichen Spektralbereichen beleuchtet wird. Die Trennung der "reinen" Eigen- und Projektionsmusterbilder erfolgt dann durch spektrale Nachbearbeitung der Aufnahmen. Auch eine Trennung der "reinen" Bilder durch Raumfrequenzfilterung in den Aufnahmen ist denkbar. Dies führt jedoch zu einem erheblichen Mehraufwand, und zwar sowohl im Hinblick auf den experimentellen Aufbau wie auch im Hinblick auf die rechnerische Nachbearbeitung.

Aus der US 4,967,093 A ist ein Verfahren zum Messen von Deformationen eines Prüfobjektes bekannt, das auf der Kreuzkorrelation von Speckle-Aufnahmen des Prüfobjektes zu unterschiedlichen Zeitpunkten basiert.

Ein ähnliches Verfahren ist aus Chen, D.J. et al.: "Optimal Sampling and Range Measurement in Displacement-only Laser-speckle Correlation", EXPERIMANTAL MECHANICS, SPRINGER NEW YORK LLC, US, Bd. 32, 1. Januar 1992, S. 145-153 bekannt.

Aus Sutton, M. A. et al.: "Application of an optimized digital correlation method to planar deformation analysis", IMAGE AND VISION COMPUTING, ELSVIER, GUILDFORD, GB, Bd. 4, Nr. 3, 1.August 1996, S. 143-150 ist ein korrelationsbasiertes Verfahren zu Bestimmung ebener Verschiebungsvektorfelder bekannt.

### Aufgabenstellung

Es ist die Aufgabe der vorliegenden Erfindung, ein gattungsgemäßes Verfahren zur Ermittlung der 3D-Verformung eines Prüfobjektes zur Verfügung zu stellen, welches eine präzise zeitliche Zuordnung mit verringertem Aufwand zulässt.

### Darlegung der Erfindung

Diese Aufgabe wird durch ein Verfahren mit den Merkmalen des unabhängigen Anspruchs 1 gelöst.

Die
Aufgabe wird in Verbindung mit den Merkmalen des Oberbegriffs von Anspruch 1 dadurch gelöst, dass
- zu einem Testzeitpunkt ein Bild einer ersten der zwei Bildarten und zu zwei Aufnahmezeitpunkten in zeitlichem Abstand vor und nach dem Testzeitpunkt jeweils ein Bild der zweiten der zwei Bildarten aufgenommen wird,
- aus den den Bildern der zweiten Bildart zugeordneten, berechneten Repräsentationen des Prüfobjektes durch Mittelung die entsprechende Repräsentation des Prüfobjektes zum Testzeitpunkt abgeschätzt wird und
- der Ermittlung des räumlichen Verschiebungsvektorfeldes die dem Bild der ersten Bildart zugeordnete, berechnete Repräsentation des Prüfobjektes sowie die aus den Bildern der zweiten Bildart abgeschätzte Repräsentation des Prüfobjektes zu Grunde gelegt wird.

Bevorzugte Ausführungsformen sind Gegenstand der abhängigen Ansprüche.

Anstelle nur zweier Bilder werden erfindungsgemäß wenigstens 3 Bilder aufgenommen, nämlich ein Eigenmusterbild und zwei Projektionsmusterbilder oder ein Projektionsmusterbild und zwei Eigenmusterbilder, wobei die nur einfach aufgenommene Bildart zeitlich von der doppelt aufgenommenen Bildart flankiert wird. Wird zum gegebenen Testzeitpunkt also ein Eigenmusterbild aufgenommen, wird kurz vor und kurz nach dem Testzeitpunkt je ein Projektionsmusterbild aufgenommen. Wird umgekehrt zum Testzeitpunkt ein Projektionsmusterbild aufgenommen, wird kurz vor und kurz nach dem Testzeitpunkt je ein Eigenmusterbild aufgenommen. Allgemein gesprochen wird also das zum Testzeitpunkt aufgenommene Bild erster Bildart zeitlich von zwei Aufnahmen je eines Bildes zweiter Bildart flankiert. Sodann wird aus den flankierenden Bildern der zweiten Bildart jeweils die zugeordnete Repräsentation des Prüfobjektes berechnet. Handelt es sich bei den flankierenden Bildern zweiter Bildart um Projektionsmusterbilder, wird aus jedem von ihnen die für den jeweiligen Aufnahmezeitpunkt des Projektionsmusterbildes repräsentative Form des Prüfobjektes berechnet. Handelt es sich bei den flankierenden Bildern zweiter Bildart jedoch um Eigenmusterbilder, wird aus jedem von ihnen die für den jeweiligen Aufnahmezeitpunkt des Eigenmusterbildes repräsentative 2D-Verformung berechnet. Die jeweils benötigten drei Bilder können z.B. isoliert aufgenommen oder aus einer Reihe vieler aufgenommener Bilder alternierender Bildart ausgewählt sein. Letztere Variante hat den Vorteil, dass in der Nähe um einen interessieren Zeitpunkt mehrere Bild-Tripel unterschiedlicher Zusammensetzung (Eigen-/Projektions-/Eigen- oder Projektions-/Eigen-/Projektions-Bild) zur Verfügung stehen.

In einem nächsten Schritt werden die berechneten Repräsentationen miteinander gemittelt. Insbesondere kann es sich hierbei um eine arithmetische Mitteilung handeln, wobei auch andere Mittelwertberechnungen grundsätzlich einsetzbar sind. Aus zwei Formen des Prüfobjektes zu den Aufnahmezeitpunkten zweier flankierender Projektionsmusterbilder wird also eine mittlere Form des Prüfobjektes gemittelt, die als repräsentativ für einen zwischen den beiden Aufnahmezeitpunkten liegenden Zeitpunkt, insbesondere repräsentativ für den Testzeitpunkt angesehen werden kann. Aus zwei 2D-Verformungen des Prüfobjektes zu den Aufnahmezeitpunkten zweier flankierender Eigenmusterbilder hingegen wird eine mittlere 2D-Verformung gemittelt, die repräsentativ für einen Zeitpunkt zwischen den beiden Aufnahmezeitpunkten, insbesondere repräsentativ für den Testzeitpunkt ist. Allgemein gesprochen wird also diejenige für die Ermittlung der 3D-Verformung erforderliche Repräsentation des Prüfobjektes, für die zum Testzeitpunkt kein Bild der zugeordneten Bildart aufgenommen wurde, durch Mittelung abgeschätzt.

In einem weiteren Schritt, der auch vor oder parallel zu dem zuvor erläuterten Schritt durchgeführt werden kann, wird die dem zum Testzeitpunkt aufgenommenen Bild zugeordnete Repräsentation des Prüfobjektes berechnet. Wurde zum Testzeitpunkt ein Eigenmusterbild aufgenommen, wird also die für den Testzeitpunkt repräsentative 2D-Verformung berechnet; wurde hingegen zum Testzeitpunkt ein Projektionsmusterbild aufgenommen, wird die für den Testzeitpunkt repräsentative Form des Prüfobjektes berechnet.

Als das Prüfobjekt zum Testzeitpunkt repräsentierende Repräsentationen stehen also die aus dem zum Testzeitpunkt aufgenommenen Bild unmittelbar berechnete Repräsentation und die aus den flankierenden Bildern auf dem Umweg über die Mittelung abgeschätzte Repräsentation zur Verfügung. Aus diesen beiden Repräsentationen, also der berechneten und der abgeschätzten Repräsentation, wird dann in üblicher Weise die 3D-Verformung des Prüfobjektes ermittelt. Anstelle aus zu unterschiedlichen Zeitpunkten aufgenommenen Bildern unmittelbar berechneter oder aus simultan aufgenommenen und aufwendig getrennten Bildern unmittelbar berechneter Repräsentationen des Prüfobjektes werden der Ermittlung der 3D-Verformung erfindungsgemäß also eine berechnete und eine abgeschätzte Repräsentation zugrunde gelegt.

Die Erfindung ermöglicht es, die 3D=Verformung für einen exakt bestimmten Testzeitpunkt zu ermitteln, ohne dass ein hoher apparativer und rechnerischer Aufwand zur Extraktion "reiner" Eigen- und Projektionsmusterbilder aus zum Testzeitpunkt aufgenommenen Mischbildern betrieben werden müsste.

Bevorzugt sind die Aufnahmezeitpunkte der Bilder der zweiten Bildart, d.h. der flankierenden Bilder, zeitlich gleich weit vom Testzeitpunkt beabstandet. Eine solche Aufnahmesymmetrie vereinfacht die erfindungsgemäße Mittelung. Es ist allerdings auch möglich, asymmetrische zeitliche Aufnahmemuster anzuwenden, was dann, falls nötig, durch eine entsprechend modifizierte Mittelwertberechnung kompensiert werden kann.

Wie oben bereits ausgeführt, sind zwei grundsätzliche Varianten des Verfahrens denkbar. Bei einer ersten Verfahrensvariante ist das zum Testzeitpunkt aufgenommene Bild ein Eigenmusterbild. Hieraus ergibt sich zwingend, dass die flankierenden Bilder Projektionsmusterbilder sind. Bei einer zweiten Verfahrensvariante sind die Verhältnisse umgekehrt. Hier ist das zum Testzeitpunkt aufgenommene Bild ein Projektionsmusterbild. Die flankierenden Bilder sind dann zwingend Eigenmusterbilder. Die sich ergebenden Konsequenzen für die zugeordneten Repräsentationen wurden oben bereits durchdekliniert.

Günstigerweise ist vorgesehen, dass zur Berechnung jedes ebenen Verschiebungsvektorfeldes, d.h. jeder 2D-Verformung, des Prüfobjektes das jeweilige Eigenmusterbild mit einem zu einem Referenzzeitpunkt aufgenommenen Eigenmusterbild des Prüfobjektes verglichen wird. Es kann sich hierbei um einen statischen Referenzzeitpunkt handeln oder aber um einen "wandernden" Referenzzeitpunkt. Letzteres bietet sich insbesondere bei repetitiven Verfahren an, bei denen die 3D-Verformung gemäß dem erfindungsgemäßen Verfahren zu mehreren aufeinanderfolgenden Zeitpunkten jeweils relativ zu einem vorangegangenen Messzeitpunkt bestimmt wird.

Unabhängig von der konkreten Wahl des Referenzzeitpunktes hat es sich als günstig erwiesen, wenn der Vergleich als eine auf eine Mehrzahl von Bildausschnitten angewendete, zweidimensionale Kreuzkorrelationsberechnung der zu vergleichenden Eigenmusterbilder erfolgt. Hierzu werden die miteinander zu vergleichenden Eigenmusterbilder in gleichartige, definierte Fenster zerlegt und die jeweils korrespondierenden Fenster mittels einer zweidimensionalen Kreuzkorrelationsberechnung miteinander verrechnet. Insbesondere kann die dem Fachmann als DIC (Digital Image Correlation) bekannte Berechnungsmethode angewendet werden. Es resultiert ein ebenes Verschiebungsvektorfeld, welches jedem der Fenster einen zweidimensionalen Verschiebungsvektor zuordnet. Durch Wahl der Fenstergröße kann die Auflösung des ebenen Verschiebungsvektorfeldes variiert und an die Erfordernisse des Einzelfalls angepasst werden. Dem Fachmann sind mehrere Alternativen bekannt. So können z.B. anstelle des DIC die als "optischer Fluss" oder "least square matching" bekannten Verfahren Anwendung finden. Sämtliche Verfahren lassen sich in lokalen Varianten, d.h., wie oben beschrieben, unter Zerlegung der Bilder in lokale Interrogationsfenster, oder in globalen, jeweils simultan auf das gesamte Bild angewendeten Varianten durchführen.

Bevorzugt ist weiter vorgesehen, dass der Ermittlung des räumlichen Verschiebungsvektorfeldes, d.h. der 3D-Verformung des Prüfobjektes, das berechnete oder abgeschätzte ebene Verschiebungsvektorfeld, d.h. die 2D-Verformung des Prüfobjektes zum Testzeitpunkt, und entsprechend die abgeschätzte oder berechnete Form des Prüfobjektes zum Testzeitpunkt im Vergleich zu einer für den Referenzzeitpunkt repräsentativen Form des Prüfobjektes zugrunde gelegt wird. Wie oben bereits erläutert, kann für die Ermittlung der 3D-Verformung nicht nur die absolute Form des Prüfobjektes zum Testzeitpunkt, sondern insbesondere eine zu diesem Zeitpunkt realisierte Formänderung im Vergleich zu einer Referenzform ausschlaggebend sein. Bei der Referenzform kann es sich um eine abstrakte Soll-Form oder um die Form des konkreten Prüfobjektes zu einem definierten Referenzzeitpunkt handeln. In letzterem Fall gilt für den Form-Referenzzeitpunkt sinngemäß das gleiche wie oben im Zusammenhang mit dem 2D-Verformungs-Referenzzeitpunkt erläutert. Günstigerweise werden die Referenzzeitpunkte für die 2D-Verformung und die Form identisch gewählt.

Insbesondere im Fall der repetitiven Bestimmung der 3D-Verformung, wenn die Daten einer vorangegangenen Messung als Referenzwerte für die aktuelle Messung herangezogen werden, d.h. wenn für den exakten Referenzzeitpunkt nicht Bilder beider Bildarten vorliegen, kann es günstig sein, wenn die für den Referenzzeitpunkt repräsentative Form des Prüfobjektes aus einem oder mehreren in zeitlicher Nähe zum Referenzzeitpunkt aufgenommenen Projektionsmusterbildern berechnet oder abgeschätzt wird. Es kann also entweder als Referenz-Form diejenige Form verwendet werden, die sich aus einem in zeitlicher Nähe zum eigentlichen Referenzzeitpunkt aufgenommenen Projektionsmusterbild ergibt oder es kann die im Rahmen der vorangegangenen, hier als Referenz dienenden Messung durch Mittelung erfindungsgemäß abgeschätzte Form des Prüfobjektes als Referenz-Form herangezogen werden. Die erstgenannte Variante bietet sich insbesondere dann an, wenn das Prüfobjekt zwischen den beiden Referenzzeitpunkten keiner mechanischen Spannung ausgesetzt ist.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine grob schematische Darstellung eines Messaufbaues zur Durchführung des erfindungsgemäßen Verfahrens,
- Figur 2:: eine Darstellung einer ersten Ausführungsform des erfindungsgemäßen Verfahrens,
- Figur 3:: eine Darstellung einer zweiten Ausführungsform des erfindungsgemäßen Verfahrens.

### Ausführliche Beschreibung bevorzugter Ausführungsformen

Gleiche Bezugszeichen in den Figuren deuten auf gleiche oder analoge Elemente hin.

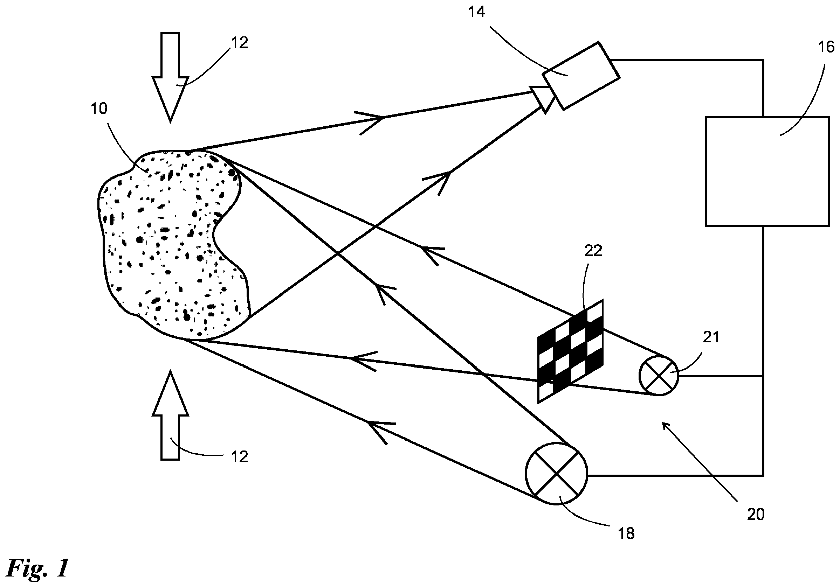

Figur 1 zeigt in grober Schematisierung den grundsätzlichen Aufbau eines Messstandes zur Durchführung des erfindungsgemäßen Verfahrens. Aufgabe der Messung ist die Bestimmung der 3D-Verformung eines Prüfobjektes 10, welches in einer nicht näher dargestellten Apparatur einer mechanischen Spannung symbolisiert durch die Belastungspfeile 12, ausgesetzt ist. Das Prüfobjekt 10 wird mittels eines Bilddetektors 14 beobachtet, der an eine Steuereinrichtung 16 angeschlossen ist und von dieser einerseits Steuerbefehle erhält und an die er andererseits seine aufgenommenen Bilddaten zur weiteren Verarbeitung liefert. Die zur Bildaufnahme des Prüfobjektes 10 erforderliche Beleuchtung stammt bei der dargestellten Ausführungsform von zwei Beleuchtungseinrichtungen 18, 20, die ebenfalls an die Steuereinrichtung 16 angeschlossen sind und von dieser ihre Steuerbefehle erhalten.

Die erste Beleuchtungseinrichtung 18 liefert ein im Wesentlichen gleichförmiges Licht, beispielsweise auf LED- oder Laser-Basis. Bei ausschließlicher Beleuchtung des Prüfobjektes 10 mittels der ersten Beleuchtungseinrichtung 18 nimmt der Bilddetektor 14 sogenannte Eigenmusterbilder auf, auf denen eine kleinräumige Eigenmusterstruktur der Oberfläche des Prüfobjektes 10 erkennbar ist. Diese Eigenmusterstruktur kann sich durch Eigenschaften der Objektoberfläche selbst, beispielsweise deren Rauheit, Korngrenzen, oder eine natürliche Sprenkelung ergeben; sie kann jedoch auch künstlich aufgebracht sein, beispielsweise durch Besprühen mit einem Farbnebel oder als ein Speckle-Muster im Fall einer laserbasierten ersten Beleuchtungseinrichtung 18.

Die zweite Beleuchtungseinrichtung 20 umfasst eine eigentliche Lichtquelle 21 und eine Projektionsmustermaske 22, die ein im Vergleich zum Eigenmuster großräumiges, periodisches Projektionsmuster als flächige Anordnung von Bereichen höherer und niedrigerer Transparenz für das Licht der Lichtquelle 21 aufweist. Es hat sich jedoch gezeigt, dass weder die Periodizität noch die Großräumigkeit des Projektionsmusters zwingend erforderlich ist. Es können auch kleinräumige und nicht-periodische Projektionsmuster verwendet werden, solange sie nur im Detail bekannt sind. Bei Beleuchtung des Prüfobjektes 10 mittels der zweiten Beleuchtungseinrichtung 20 wird das Projektionsmuster der Projektionsmustermaske 22 auf die Oberfläche des Prüfobjektes 10 projiziert und dabei entsprechend der dreidimensionalen Form des Prüfobjektes verzerrt. Aufnahme des mittels der zweiten Beleuchtungseinrichtung 20 beleuchteten Prüfobjektes 10 durch den Bilddetektor 14 liefert ein Projektionsmusterbild. Der Begriff des Projizierens bzw. des Projektors ist im Kontext der Erfindung - nicht nur im Kontext des hier diskutierten Ausführungsbeispiels - weit zu verstehen und umfasst klassische Projektoren, die eine starre Maske auf das Prüfobjekt 10 abbilden, als auch moderne Beamer, die mittels ihres Multi-Mirror-Arrays (MMA) eine nahezu beliebig programmierbare, wechselnde Musterwahl ermöglichen. Letztere Variante hat den Vorteil, dass die beiden Beleuchtungseinrichtungen 18, 20 apparativ zusammengefasst werden können, indem allein durch Umprogrammierung des MMA zwischen Eigenmusterbeleuchtung und Projektionsmusterbeleuchtung umgeschaltete wird.

Berechnungsmethoden zur Ermittlung der Form oder Formänderung des Prüfobjektes 10 aus einem oder mehreren Projektionsmusterbildern sind dem Fachmann ebenso bekannt wie Berechnungsverfahren zur Ermittlung der 2D-Verformung aus mehreren Eigenmusterbildern. Letztere sollen hier mit der Abkürzung DIC zusammengefasst werden, ohne dass dies eine Beschränkung auf eine spezielle Berechnungsmethode implizieren würde. Ebenso bekannt sind dem Fachmann Berechnungsmethoden zur Ermittlung einer 3D-Verformung des Prüfobjektes 10 aus der aus Eigenmusterbildern ermittelten 2D-Verformung und der aus Projektionsmusterbildern ermittelten Form bzw. Formänderung. Auf diese rechentechnischen Details soll daher hier nicht weiter eingegangen werden.

Der Fachmann wird verstehen, dass die schematische Apparatur gemäß Figur 1 rein beispielhaft zu verstehen ist und keine Einschränkung der Erfindung bedeutet. Insbesondere können auch mehrere Bilddetektoren 14, insbesondere mit unterschiedlichen Beobachtungswinkeln zum Prüfobjekt 10, vorgesehen sein. Auch ist es möglich, die erste und zweite Beleuchtungseinrichtung 18, 20 in einer einheitlichen Beleuchtungseinrichtung zusammenzufassen oder alternativ mehrere solcher Beleuchtungseinrichtungen vorzusehen. Selbstverständlich ist es auch nicht zwingend erforderlich, das Prüfobjekt 10 mit einer speziellen Apparatur unter definierte mechanische Spannung zu setzen. Auch thermisch oder anderweitig induzierte Verformungen sind dem erfindungsgemäßen Messverfahren ohne weiteres zugänglich.

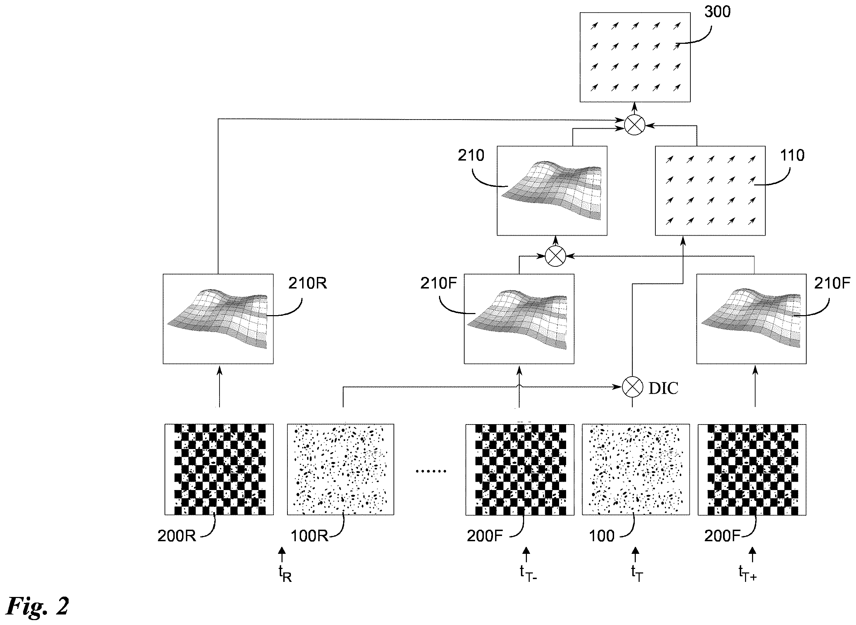

Figur 2 zeigt eine bevorzugte Ausführungsform des erfindungsgemäßen Verfahrens. Zu einem Testzeitpunkt t_{T} wird ein Eigenmusterbild 100 aufgenommen. Dieses wird mittels DIC mit einem zu einem vorangegangenen Referenzzeitpunkt t_{R} gemessenen Referenz-Eigenmusterbild 100 R verglichen und liefert ein ebenes Verschiebungsvektorfeld 110, d.h. die für den Testzeitpunkt t_{T} repräsentative 2D-Verformung.

Zu dem zeitlich vor dem Testzeitpunkt t_{T} gelegenen linksflankierenden Zeitpunkt t_{T-} und dem zeitlich nach dem Testzeitpunkt t_{T} gelegenen rechtsflankierenden Zeitpunkt t_{T+} wird jeweils ein flankierendes Projektionsmusterbild 200F aufgenommen. Aus jedem der flankierenden Projektionsmusterbilder 200F wird die für den entsprechenden Aufnahmezeitpunkt t_{T-} bzw. t_{T+} repräsentative Form 210F (flankierende Form) des Prüfobjektes berechnet. Aus den beiden flankierenden Formen 210F wird dann durch Mittelung die für den Testzeitpunkt t_{T} repräsentative Form 210 abgeschätzt. In einem letzten Verfahrensschritt werden die für den Testzeitpunkt t_{T} repräsentative, berechnete 2D-Verformung 110 und die für denselben Testzeitpunkt t_{T} repräsentative, abgeschätzte Form 210 zur gesuchten 3D-Verformung, d.h. dem gesuchten räumlichen Verschiebungsvektorfeld 300 miteinander verrechnet. Hierzu wird typischerweise wie in Figur 2 angedeutet, auch die für den Referenzzeitpunkt t_{R} repräsentative Form 210R des Prüfobjektes 10 miteinbezogen. Bei der Ausführungsform von Figur 2 ist die Referenzform 210R das Ergebnis einer Formberechnung auf Basis eines Referenz-Projektionsmusterbildes 200R, welches zum Referenzzeitpunkt t_{R} aufgenommen wurde. Es kann sich jedoch bei der Referenz-Form 210R auch um eine analog zu obigen Erläuterung abgeschätzte oder eine in der Steuereinrichtung 16 statisch hinterlegte Form handeln. Denkbar ist selbstverständlich auch eine Variante, bei der die Referenzform 210R das Ergebnis einer Formberechnung auf Basis eines zeitlich versetzt zum Referenzzeitpunkt t_{R} aufgenommenen Projektionsmusterbild ist. Diese Variante bietet sich insbesondere dann an, wenn das Prüfobjekt 10 zwischen den Aufnahmen des Referenz-Eigenmusterbildes 100R und dem Aufnahmezeitpunkt des Referenz-Projektionsmusterbildes 200R keiner wesentlichen mechanischen Spannung ausgesetzt ist.

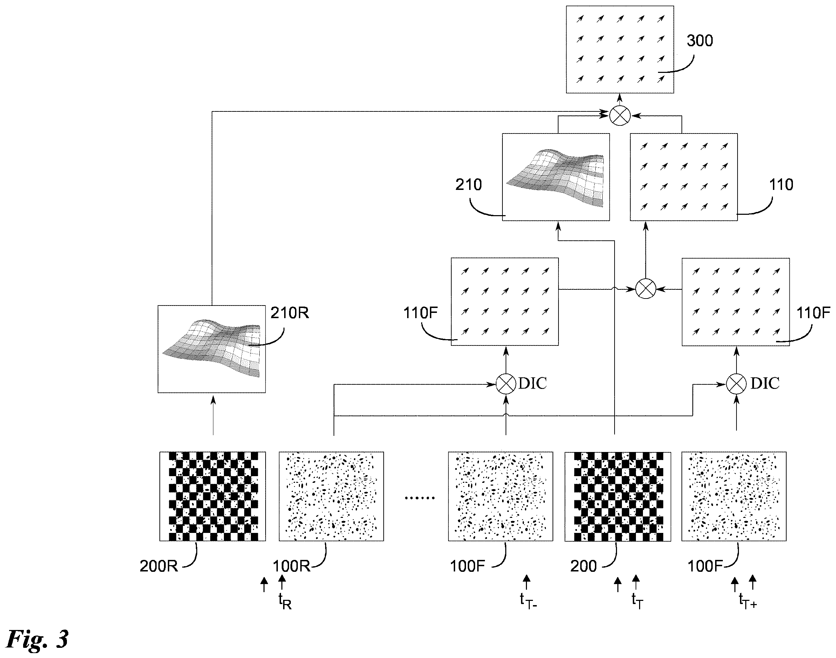

Figur 3 zeigt eine Variante des erfindungsgemäßen Verfahrens, die sich von der in Figur 2 gezeigten Variante im Wesentlichen dadurch unterscheidet, dass zum Testzeitpunkt t_{T} ein Projektionsmusterbild 200 aufgenommen wird und zu den flankierenden Zeitpunkten t_{T-} und t_{T+} jeweils ein flankierendes Eigenmusterbild 100F aufgenommen wird. Hieraus ergibt sich, dass die der 3D-Verformungsberechnung zugrunde gelegte und für den Testzeitpunkt t_{T} repräsentative Form des Prüfobjektes 10 umittelbar aus dem Projektionsmusterbild 200 berechnet ist. Die der 3D-Verformungsberechnung zugrunde gelegte und für den Testzeitpunkt t_{T} repräsentative 2D-Verformung 110 ist hingegen abgeschätzt und zwar durch Mittelung aus zwei flankierenden 2D-Verformungen 110F, die sich jeweils mittels DIC aus den flankierenden Eigenmusterbildern 100F und dem zum Referenzzeitpunkt t_{R} aufgenommenen Referenz-Eigenmusterbild 100R ergeben. Im Übrigen kann voll umfänglich auf das oben zu Figur 2 Gesagte verwiesen werden. Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben, wobei die Erfindung in den Ansprüchen definiert ist.

### Bezugszeichenliste

- 10: Prüfobjekt
- 12: Belastungspfeil
- 14: Bilddetektor
- 16: Steuereinrichtung
- 18: erste Beleuchtungseinrichtung
- 20: zweite Beleuchtungseinrichtung
- 21: Lichtquelle von 20
- 22: Projektionsmustermaske von 20
- 100: Eigenmusterbild
- 100F: flankierendes Eigenmusterbild
- 100R: Referenz-Eigenmusterbild
- 110: 2D-Verformung/flächiges Verschiebungsvektorfeld
- 110F: flankierende 2D-Verformung/flächiges Verschiebungsvektorfeld
- 200: Projektionsmusterbild
- 200F: flankierendes Projektionsmusterbild
- 200R: Referenz-Projektionsmusterbild
- 210: Form
- 210F: flankierende Form
- 210R: Referenz-Form
- 300: 3D-Verformung/räumliches Verschiebungsvektorfeld
- t_{T}: Testzeitpunkt
- t_{T-}, t_{T+}: flankierende Aufnahmezeitpunkte
- t_{R}: Referenzzeitpunkt

## Patentansprüche

1. Verfahren zur Ermittlung eines räumlichen Verschiebungsvektorfeldes (300) eines Prüfobjektes (10),
bei dem von dem Prüfobjekt (10) Bilder zweier Bildarten aufgenommen werden, nämlich
- wenigstens ein Eigenmusterbild (100, 100F), bei dessen Aufnahme das Prüfobjekt (10) mit gleichförmigem Beleuchtungslicht beleuchtet wird, und
- wenigstens ein Projektionsmusterbild (200, 200F), bei dessen Aufnahme das Prüfobjekt (10) mit einem räumlich modulierten, auf das Prüfobjekt projizierten Projektionsmuster beleuchtet wird,
wobei
- aus dem Eigenmusterbild (100, 100F) durch dessen Vergleich mit einem zu einem Referenzzeitpunkt (t_{R}) aufgenommenen Eigenmusterbild (100R) des Prüfobjektes (10) ein ebenes Verschiebungsvektorfeld (110, 110F) des Prüfobjektes (10) zum Aufnahmezeitpunkt des Eigenmusterbildes (100, 100F) als dem Eigenmusterbild (100, 100F) zugeordnete Repräsentation des Prüfobjektes (10) berechnet wird und
- aus dem Projektionsmusterbild (200, 200F) eine Form (210, 210F) des Prüfobjektes zum Aufnahmezeitpunkt des Projektionsmusterbildes (200, 200F) als dem Projektionsmusterbild (200, 200F) zugeordnete Repräsentation des Prüfobjektes (10) berechnet wird
und wobei das räumliche Verschiebungsvektorfeld (300) aus den den aufgenommenen Bildern (100, 100F; 200, 200F) zugeordneten Repräsentationen des Prüfobjektes (10) ermittelt wird,
**dadurch gekennzeichnet, dass**
- zu einem Testzeitpunkt (t_{T}) ein Bild (100; 200) einer ersten der zwei Bildarten und zu zwei Aufnahmezeitpunkten (t_{T-}; t_{T+}) in zeitlichem Abstand vor und nach dem Testzeitpunkt (t_{T}) jeweils ein Bild (100 F; 200F) der zweiten der zwei Bildarten aufgenommen wird,
- aus den den Bildern (100F; 200F) der zweiten Bildart zugeordneten, berechneten Repräsentationen des Prüfobjektes (10) durch Mittelung die entsprechende Repräsentation des Prüfobjektes (10) zum Testzeitpunkt (t_{T}) abgeschätzt wird und
- der Ermittlung des räumlichen Verschiebungsvektorfeldes (300) die dem Bild (100, 200) der ersten Bildart zugeordnete, berechnete Repräsentation des Prüfobjektes (10) sowie die aus den Bildern (100F; 200F) der zweiten Bildart abgeschätzte Repräsentation des Prüfobjektes zu Grunde gelegt wird.

2. Verfahren nach Anspruch 1,
**dadurch gekennzeichnet,**
**dass** die Aufnahmezeitpunkte (t_{T-};t_{T+}) der Bilder (100F; 200F) der zweiten Bildart zeitlich gleich weit vom Testzeitpunkt (t_{T}) beabstandet sind.

3. Verfahren nach einem der vorangehenden Ansprüche,
**dadurch gekennzeichnet,**
**dass** das zum Testzeitpunkt (t_{T}) aufgenommene Bild ein Eigenmusterbild (100) ist.

4. Verfahren nach einem der Ansprüche 1 bis 2,
**dadurch gekennzeichnet,**
**dass** das zum Testzeitpunkt (t_{T}) aufgenommene Bild ein Projektionsmusterbild (200) ist.

5. Verfahren nach einem der vorangehenden Ansprüche,
**dadurch gekennzeichnet,**
**dass** zur Berechnung jedes ebenen Verschiebungsvektorfeldes (110; 110F) des Prüfobjektes (10) das jeweilige Eigenmusterbild (100; 100F) mit einem zu einem Referenzzeitpunkt (t_{R}) aufgenommenen Eigenmusterbild (100R) des Prüfobjektes (10) verglichen wird.

6. Verfahren nach Anspruch 5,
**dadurch gekennzeichnet,**
**dass** der Vergleich als eine auf eine Mehrzahl von Bildausschnitten angewendete, zweidimensionale Kreuzkorrelationsberechnung der zu vergleichenden Eigenmusterbilder (100, 100R; 100F, 100R) erfolgt.

7. Verfahren nach einem der Ansprüche 5 bis 6,
**dadurch gekennzeichnet,**
**dass** der Ermittlung des räumlichen Verschiebungsvektorfeldes (300) des Prüfobjektes (10) das berechnete oder abgeschätzte ebene Verschiebungsvektorfeld (110) des Prüfobjektes (10) zum Testzeitpunkt (t_{T}) und entsprechend die abgeschätzte oder berechnete Form (210) des Prüfobjektes (10) zum Testzeitpunkt (t_{T}) im Vergleich zu einer für den Referenzzeitpunkt (t_{R}) repräsentativen Form (210R) des Prüfobjektes (10) zu Grunde gelegt wird.

8. Verfahren nach Anspruch 7,
**dadurch gekennzeichnet,**
**dass** die für den Referenzzeitpunkt (t_{R}) repräsentative Form (210R) des Prüfobjektes (10) aus einem oder mehreren in zeitlicher Nähe zum Referenzzeitpunkt (t_{R}) aufgenommenen Projektionsmusterbildern (200R) berechnet oder abgeschätzt wird.

9. Verfahren nach einem der vorangehenden Ansprüche,
**dadurch gekennzeichnet,**
**dass** das Projektionsmuster mittels eines programmierbaren Multi-Mirror-Arrays erzeugt wird.

## Claims

1. A method for determining a spatial displacement vector field (300) of a test object (10),
in which two types of image are recorded of the test object (10), specifically
- at least one inherent pattern image (100, 100F) recorded when the test object (10) is illuminated with uniform illumination light, and
- at least one projection pattern image (200, 200F), recorded when the test object (10) is illuminated with a spatially modulated projection pattern projected onto said test object,
wherein
- a planar displacement vector field (110, 110F) of the test object (10) is calculated from the inherent pattern image (100, 100F) at the time of recording the inherent pattern image (100, 100F) as a representation of the test object (10) assigned to the inherent pattern image (100, 100F) by comparing the inherent pattern image (100, 100F) with an inherent pattern image (100R) taken at a reference time (tR) of the test object (10), and
- a shape (210, 210F) of the test object at the time when the projection pattern image (200, 200F) was recorded is calculated from the projection pattern image (200, 200F) as the representation of the test object (10) assigned to the projection pattern image (200, 200F)
and wherein the spatial displacement vector field (300) is determined from the representations of the test object (10) which are assigned to the recorded images (100, 100F, 200, 200F),
**characterised in that**
- at a test time (t_{T}), an image (100; 200) of a first of the two types of image, and at two recording times (t_{T}-; t_{T}+) temporally spaced before and after the test time (t_{T}), in each case one image (100F; 200F) of the second of the two types of image is recorded,
- from the calculated representations of the test object (10) assigned to the images (100F; 200F) of the second type of image, the corresponding representation of the test object (10) at the test time (t_{T}) is estimated by averaging, and
- the determination of the spatial displacement vector field (300) is based on the calculated representation of the test object (10) which is assigned to the image (100, 200) of the first type of image, as well as on the representation of the test object estimated from the images (100F; 200F) of the second type of image.

2. The method according to claim 1,
**characterised in that**
the recording times (t_{T}-; t_{T}+) of the images (100F; 200F) of the second type of image are temporally equidistant from the test time (t_{T}).

3. The method according to any of the above claims,
**characterised in that**
the image recorded at the test time (t_{T}) is an inherent pattern image (100).

4. The method according to any of claims 1 to 2,
**characterised in that**
the image recorded at the test time (t_{T}) is a projection pattern image (200).

5. The method according to any of the above claims,
**characterised in that**
for calculating every planar displacement vector field (110; 110F) of the test object (10) the respective inherent pattern image (100; 100F) is compared with an inherent pattern image (100R) of the test object (10) recorded at a reference time (t_{R}).

6. The method according to claim 5,
**characterised in that**
the comparison is carried out as a two-dimensional cross-correlation calculation of the inherent pattern images (100, 100R; 100F, 100R) which are to be compared, said calculation being applied to a plurality of image segments.

7. The method according to any of claims 5 to 6,
**characterised in that**
the determination of the spatial displacement vector field (300) of the test object (10) is based on the calculated or estimated planar displacement vector field (110) of the test object (10) at test time (t_{T}) and correspondingly on the estimated or calculated shape (210) of the test object (10) at the test time (t_{T}) compared to a shape (210R) of the test object (10) that is representative for the reference time (t_{R}).

8. The method according to claim 7,
**characterised in that**
the shape (210R) of the test object (10) that is representative for the reference time (t_{R}) is calculated or estimated from one or more projection pattern images (200R) recorded in close temporal proximity to the reference time (t_{R}).

9. The method according to any of the above claims,
**characterised in that**
the projection pattern is produced by means of a programmable multi-mirror-array.

## Revendications

1. Procédé de détermination d'un champ vectoriel de déplacement spatial (300) d'un objet à contrôler (10)
selon lequel on prend des images de deux types de l'objet à contrôler (10), à savoir
- au moins une image modèle propre (100, 100F) prise en éclairant l'objet à contrôler (10) avec une lumière d'éclairage uniforme, et
- au moins une image modèle de projection (200, 200F) prise en éclairant l'objet à contrôler (10) avec un modèle de projection modulé dans l'espace, projeté sur l'objet à contrôler (10),
sachant
- qu'un champ vectoriel de déplacement planaire (110, 110F) d'un objet à contrôler (10) étant calculé à partir de l'image modèle propre (100, 100F) au moment où l'image modèle propre (100, 100F) est prise en tant que représentation de l'objet à contrôler (10) attribué à l'image modèle propre (100, 100F) en comparant l'image modèle propre (100, 100F) à l'image modèle propre (100R) prise à un temps de référence (t_{R}) de l'objet à contrôler (10), et
- à partir de l'image modèle de projection (200, 200F), on calcule, au moment où l'image modèle de projection est prise, une forme (210, 210F) de l'objet à contrôler (10) en tant que représentation de l'objet à contrôler (10) associée à l'image modèle de projection (200, 200F)
et sachant que le champ vectoriel de déplacement spatial (300) est déterminé à partir des représentations de l'objet à contrôler (10) associées aux images prises (100, 100F, 200, 200F),
**caractérisé en ce que**
- à un temps d'essai (t_{T}), une image (100; 200) d'un premier des deux types d'image, et à deux temps de prise (t_{T}-; t_{T}+) temporellement espacés avant et après le temps d'essai (t_{T}), une image (100F; 200F) du second des deux types d'image est prise dans l'un ou l'autre cas,
- à partir des représentations calculées de l'objet à contrôler (10) attribué aux images (100F; 200F) du second type d'image, la représentation correspondante de l'objet à contrôler (10) au temps d'essai (t_{T}) est estimée en calculant la moyenne, et
- la détermination du champ de vecteur de déplacement spatial (300) est basée sur la représentation calculée de l'objet à contrôler (10) qui est attribué à l'image (100, 200) du premier type d'image, ainsi que sur la représentation de l'objet à contrôler estimé à partir des images (100F; 200F) du second type d'image.

2. Procédé selon la revendication 1,
**caractérisé en ce que**
les temps de prise (t_{T}-; t_{T}+) des images (100F; 200F) du second type d'image sont temporellement équidistants du temps d'essai (t_{T}).

3. Procédé selon une quelconque des revendications précédentes,
**caractérisé en ce que**
l'image prise au temps d'essai (t_{T}) est une image modèle propre (100).

4. Procédé selon une quelconque des revendications 1 à 2,
**caractérisé en ce que**
l'image prise au temps d'essai (t_{T}) est une image modèle de projection (200).

5. Procédé selon une quelconque des revendications précédentes,
**caractérisé en ce que**
pour calculer chaque champ vectoriel de déplacement planaire (110; 110F) de l'objet à contrôler (10), on compare l'image modèle propre respectif (100; 100F) à l'image modèle propre (100R) de l'objet à contrôler (10) prise au temps de référence ((t_{R}).

6. Procédé selon la revendication 5,
**caractérisé en ce que**
la comparaison est effectuée sous forme de calcul de corrélation croisée à deux dimensions des images modèles propres (100, 100R; 100F, 100R) à comparer, ledit calcul étant appliqué à une pluralité de segments d'image.

7. Procédé selon une quelconque des revendications 5 à 6,
**caractérisé en ce que**
la détermination du champ vectoriel de déplacement spatial (300) de l'objet à contrôler (10) est basée sur le champ vectoriel de déplacement planaire calculé ou estimé (110) de l'objet à contrôler au temps d'essai (t_{T}) et de ce fait sur la forme estimée ou calculée (210) de l'objet à contrôler (10) au temps d'essai (t_{T}) par rapport à une forme (210R) de l'objet à contrôler (10) qui est représentative du temps de référence (t_{R}).

8. Procédé selon la revendication 7,
**caractérisé en ce que**
la forme (210R) de l'objet à contrôler (10) qui est représentative du temps de référence (t_{R}) est calculée ou estimée à partir d'une ou plusieurs images modèles de projection (200R) prises à un moment proche du temps de référence (t_{R}).

9. Procédé selon une quelconque des revendications précédentes,
**caractérisé en ce que**
le modèle de projection est produit par le moyen d'un ensemble à miroirs multiples programmable.
